# EUROPÄISCHE PATENTSCHRIFT

(11) **EP 1 486 120 B1**
(45) Veröffentlichungstag und Bekanntmachung des Hinweises auf die Patenterteilung: **29.04.2009**
(21) Anmeldenummer: 04013093.2
(22) Anmeldetag: 03.06.2004
(51) Int. Cl.: A21B 3/07, A21C 9/08, B65G 47/14

(54) **Vereinzelungsvorrichtung für Backgut**
Singulating device for bakery goods.
Dispositif de séparation de produits de boulangerie

(30) Priorität: 10.06.2003 DE 10326481; 06.08.2003 DE 10336457; 15.12.2003 DE 10358540
(43) Veröffentlichungstag der Anmeldung: 15.12.2004
(73) Patentinhaber: Werner & Pfleiderer Lebensmitteltechnik GmbH, 91550 Dinkelsbühl (DE)
(72) Erfinder: Dannenhauer, Bernd, 91550 Dinkelsbühl (DE); Blümel, Frank, 91614 Mönchsroth (DE); Schmidt, Thomas, 97340 Martinsheim (DE)
(74) Vertreter: Hofmann, Matthias

(56) Entgegenhaltungen:
- EP-A- 0 806 382
- DE-A1- 10 116 423
- DE-B- 1 004 539
- DE-B- 1 274 502
- DE-U1- 9 202 111
- US-A- 4 205 743
- US-A- 4 921 106
- US-A- 5 954 185
- US-A- 6 065 587

## Beschreibung

Die Erfindung betrifft eine Vereinzelungsvorrichtung für Backgut nach dem Oberbegriff des Anspruchs 1.

Eine derartige Vereinzelungsvorrichtung mit einem in einen runden Innenabschnitt und einen Außenabschnitt unterteilten Behälterboden ist bekannt aus der US 4,205,743.

Eine weitere Vereinzelungsvorrichtung ist durch offenkundige Vorbenutzung bekannt. Einzelne Stücke Backgut, insbesondere Teiglinge, neigen, wenn sie zueinander in Kontakt kommen, zum Verkleben. Daneben neigt Backgut zum Verkleben mit dieses fördernden Komponenten. Obwohl es eine Vielzahl unterschiedlicher Ansätze zum Vereinzeln einer Mehrzahl von Stücken Backgut, d.h. zum kontrollierten sequenziellen Fördern einer vorgegebenen Anzahl von Stücken Backgut, gibt, sind die mit dieser Verklebungsneigung verbundenen Probleme mit den bekannten Vereinzelungsvorrichtungen noch nicht befriedigend gelöst. Die Folge davon ist, dass eine vorgegebene Anzahl von Stücken Backgut automatisch nicht mit ausreichender Sicherheit zählgenau bereitgestellt werden kann. Bestimmte Anwendungen, bei denen es auf diese Genauigkeit zwingend ankommt, sind daher mit den bekannten Vereinzelungsvorrichtungen automatisiert praktisch nicht möglich. Eine derartige Anwendung ist das zählgenaue Bestücken eines Backofens, der Aufnahmen für eine vorgegebene Anzahl von Stücken Backgut hat. Bei anderen Anwendungen muss, aufgrund der mit den Unzulänglichkeiten der bekannten Vereinzelungsvorrichtungen verbundenen Zählungenauigkeiten, immer mit einem gewissen Übermaß gearbeitet werden. Sollen z.B. beim Verpacken von Teiglingen, die z.B. tief-oder teilgefroren (angetaut) vorliegen können, Gebinde mit einer Anzahl von z.B. 30 Stücken Backgut verpackt werden, so werden mit den bekannten Vereinzelungsvorrichtungen Gebinde erzeugt, die immer mindestens 30 Stücke Backgut, in der Regel aber 31 bis 34 Stücke Backgut, beinhalten. Derartige Gebinde sind natürlich in der Herstellung teurer, als wenn die geforderte Backgutanzahl zählgenau bereitgestellt werden kann. Derartige, in ihrer Anzahl schwankende Gebinde sind zudem für Anwendungen, bei denen es auf die exakte Bereitstellung einer vorgegebenen Anzahl von Stücken Backgut mit den Gebinden ankommt, nicht brauchbar.

Es ist daher eine Aufgabe der vorliegenden Erfindung, eine Vereinzelungsvorrichtung der eingangs genannten Art derart weiterzubilden, dass ein sicheres Vereinzeln einer Mehrzahl von Stücken Backgut möglich ist.

Diese Aufgabe ist erfindungsgemäß gelöst durch eine Vereinzelungsvorrichtung mit den Merkmalen des Kennzeichnungsteiles des Anspruchs 1.

Erfindungsgemäß wurde erkannt, dass eine kontrollierte, sichere Vereinzelung einer Mehrzahl von Stücken Backgut dann möglich ist, wenn das Backgut nicht direkt einem mit dem Abgabeabschnitt in Förderverbindung stehenden Förderabschnitt zugeführt wird, sondern zunächst einem hiervon separaten Abschnitt. Die zugeführte Mehrzahl von Stücken Backgut kann sich auf diesem separaten Abschnitt, dem Innenabschnitt des Behälterbodens, zunächst verteilen und kann dann kontrolliert dem weiteren Förderabschnitt, dem Außenabschnitt, zugeleitet werden. Hierdurch werden Stauungen im Bereich dieses Förderabschnitts vermieden. Dies ermöglicht eine betriebssichere und zählgenaue Vereinzelung des Backguts. Eine gezielte Auflockerung der zu vereinzelnden Mehrzahl von Stücken Backgut geschieht durch den um die Rotationsachse mit wechselndem Drehsinn antreibbaren Innenabschnitt.

Ein Antrieb des Innenabschnitts nach Anspruch 2 bzw. ein Leitblech nach Anspruch 3 ermöglicht einen definierten Transport des Backguts hin zum Außenabschnitt. Durch den unabhängigen Antrieb von Innenabschnitt und Außenabschnitt wird die Gefahr einer Staubildung von zu vereinzelndem Backgut nochmals reduziert.

Ein Sensor nach Anspruch 4 erlaubt eine Durchsatzmessung der Vereinzelungsvorrichtung, wobei der Durchsatz zur Bedarfssteuerung in einer zentralen Steuereinrichtung ausgewertet werden kann.

Ein Zwischenbehälter nach Anspruch 5 verhindert ein unerwünschtes Überfüllen der Vereinzelungsvorrichtung. Stauungen in letzterer werden somit schon im Ansatz verhindert.

Mit einem Zwischenbehälter nach Anspruch 6 lässt sich auf einfache Weise die Abgabemenge aus diesem vorgeben.

Ein Zwischenbehälterboden nach Anspruch 7 lässt sich unaufwendig herstellen.

Eine Vereinzelungsvorrichtung nach Anspruch 8 ermöglicht ein sicheres Fördern vereinzelter Stücke Backguts.

Ein Vereinzelungs-Abweiser nach Anspruch 9 führt zu einem nochmals sichereren Vereinzeln des Backguts. Hintereinander auf dem Außenabschnitt geförderte Stücke Backgut werden auch dann sicher voneinander getrennt, wenn diese miteinander verkleben.

Ein Sensor nach Anspruch 10 erhöht die Vereinzelungssicherheit weiter. Durch diesen Sensor kann die Funktion des Vereinzelungs-Abweisers kontrolliert werden.

Ein Vereinzelungs-Abweiser nach Anspruch 11 führt zu einem sicheren Weitertransport des Backguts, nachdem dieses die Vereinzelungsvorrichtung durchlaufen hat.

Ein Ablenkelement nach Anspruch 12 führt dazu, dass Backgut in der Vereinzelungsvorrichtung nicht unerwünscht hängen bleibt, das heißt trotz des Antriebs des Außenabschnitts seine Lage in der Vereinzelungsvorrichtung nicht wesentlich verändert. Ein derartiges Ablenkelement ist insbesondere dort anzuordnen, wo aufgrund einer Verengung des Förderwegs für Stücke Backgut in der Vereinzelungsvorrichtung eine Staugefahr gegeben ist.

Ausführungsbeispiele der Erfindung werden nachfolgend anhand der Zeichnung näher erläutert. In dieser zeigen:
- Fig. 1: eine perspektivische Ansicht einer Vereinzelungsvorrichtung für Backwaren;
- Fig. 2: einen vertikalen Schnitt durch die Vereinzelungsvorrichtung nach Fig. 1 parallel zu einer senkrecht zu Fachböden von Vorratsbehältern verlaufenden Mittelebene der Vereinzelungsvorrichtung;
- Fig. 3: eine perspektivische Ansicht einer Vereinzelungseinheit der Vereinzelungsvornchtung nach den Fig. 1 und 2;
- Fig. 4: einen vertikalen Schnitt durch die Vereinzelungseinheit nach Fig. 3 senkrecht zur Schnittebene der Fig. 2;
- Fig. 5: eine weitere perspektivische Ansicht der Vereinzelungseinheit nach den Fig. 3 und 4;
- Fig. 6: eine Aufsicht auf die Vereinzelungseinheit nach den Fig. 3 bis 5;
- Fig. 7: eine Unteransicht der Vereinzelungseinheit nach den Fig. 3 bis 6;
- Fig. 8: eine perspektivische Ansicht einer Backanlage mit einem Backofen und einer alternativen Vereinzelungsvorrichtung für Backwaren;
- Fig. 9: einen vertikalen Längsschnitt durch die Backanlage nach Fig. 8;
- Fig.10: einen perspektivischen Teilausschnitt der Backanlage nach den Figuren 8 und 9 im Bereich der Vereinzelungsvorrichtung;
- Fig. 11: eine weitere perspektivische Ansicht der Vereinzelungsvorrichtung nach Fig. 10;
- Fig. 12: eine Aufsicht auf eine Vereinzelungseinheit der Vereinzelungsvorrichtung nach Fig. 11, wobei ein Zugabeabschnitt weggelassen und ein Vereinzelungs-Abweiser in einer Durchgangsstellung dargestellt ist;
- Fig.13: eine zu Fig. 12 ähnliche Darstellung der Vereinzelungseinheit mit dem Vereinzelungs-Abweiser in Abweisestellung;
- Fig. 14 u. 15: perspektivisch den Zugabeabschnitt der Vereinzelungsvorrichtung nach Fig. 11 in zwei verschiedenen Abgabestellungen eines Zwischenbodens;
- Fig. 16: vergrößert einen Vereinzelungs-Abweiser der Vereinzelungsvorrichtung nach Fig. 11; und
- Fig.17: vergrößert einen Ausgabeschieber der Vereinzelungsvorrichtung nach Fig. 11.

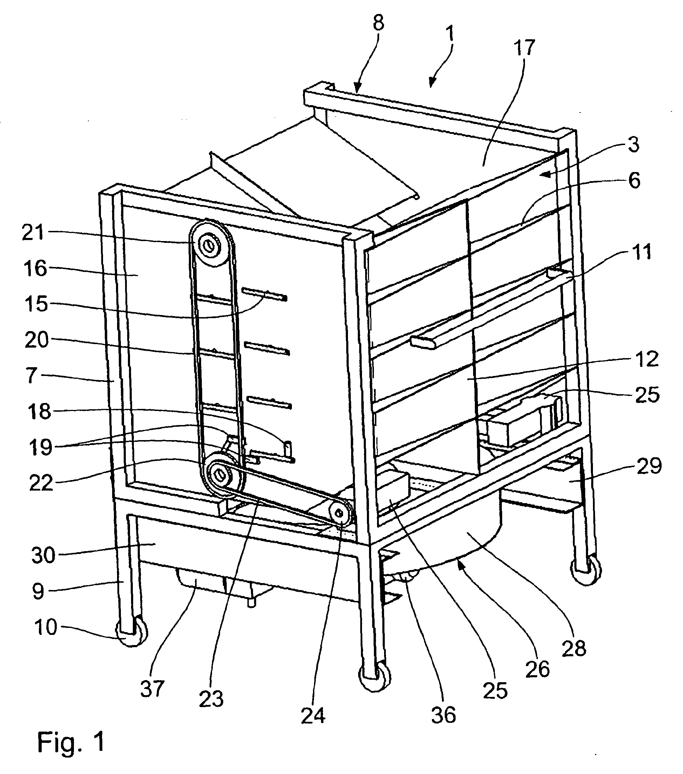

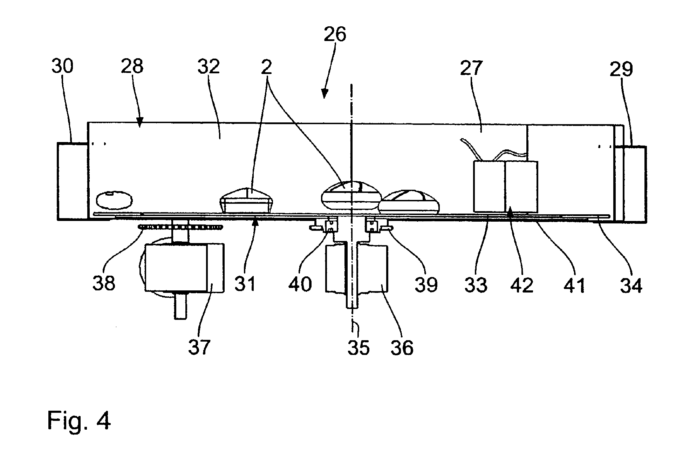

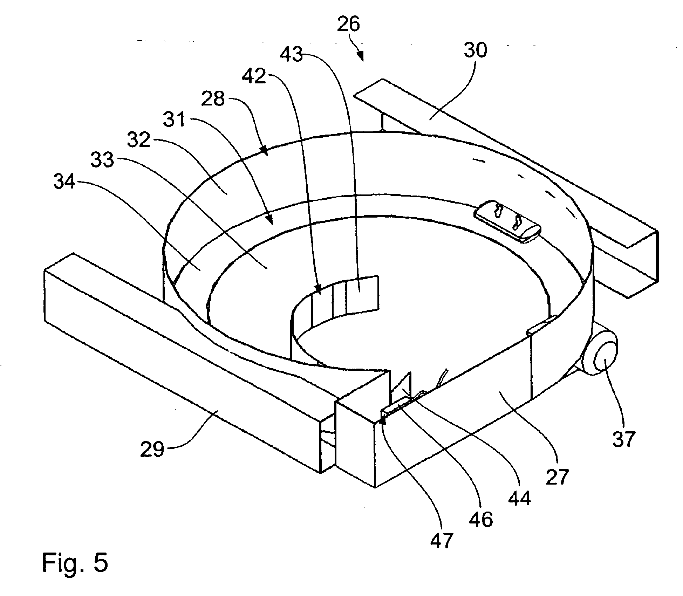

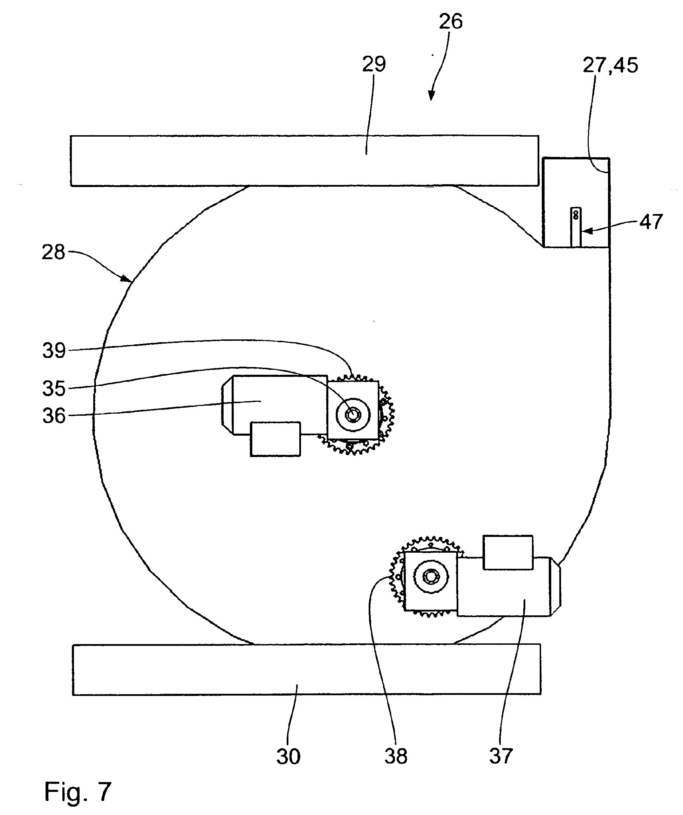

In den Figuren 1 bis 7 ist eine Vereinzelungsvorrichtung 1 für Backgut 2 dargestellt. Beim Backgut 2 handelt es sich z.B. um teilgefrorene teilgebackene Brötchen. Alternativ können auch tiefgefrorene teilgebackene, nicht gefrorene teilgebackene, tiefgefrorene nichtgebackene oder teilgefrorene nichtgebackene Stücke Backgut 2 verarbeitet werden. Natürlich ist auch die Verarbeitung gebackener Stücke Backgut möglich. Die Vereinzelungsvorrichtung 1 weist als Backgut-Vorratsbehälter insgesamt sechzehn Lagerfächer 3 auf. Jedes der Lagerfächer 3 hat einen schräg von einem äußeren Zugabeabschnitt 4 hin zu einem inneren Übergabeabschnitt 5 schräg abfallenden Fachboden 6. Die Fachböden 6 der Lagerfächer 3 sind als Rollenbahnen ausgeführt. Jeweils vier der sechzehn Lagerfächer 3 sind etagenweise übereinander angeordnet. Die Lagerfächer 3 werden von einem Tragrahmen 7 eines fahrbaren Transportwagens 8 getragen. Letzterer weist vier Stützfüße 9 mit jeweils einer Laufrolle 10 auf. Zum Transport durch eine Bedienperson weist der Transportwagen 8 einen Handgriff 11 auf.

Die Übergabeabschnitte 5 von jeweils acht der sechzehn Lagerfächer 3 sind zu zwei gegenüberliegenden Stirnseiten des Transportwagens 8 hin offen. Die acht einer dieser beiden Stirnseiten des Transportwagens 8 zugeordneten Lagerfächer 3 sind als 2x4 nebeneinander angeordnete Lagerfächer 3, also in zwei nebeneinander angeordneten Vierer-Gruppen, vorgesehen. Die nebeneinanderliegenden Lagerfächer 3 haben Fachböden 6 und werden durch eine vertikal verlaufende, durchgehende mittlere Trennwand 12 voneinander getrennt. Der Lagerbereich der Vereinzelungsvorrichtung 1 ist zur Trennwand 12 symmetrisch angeordnet.

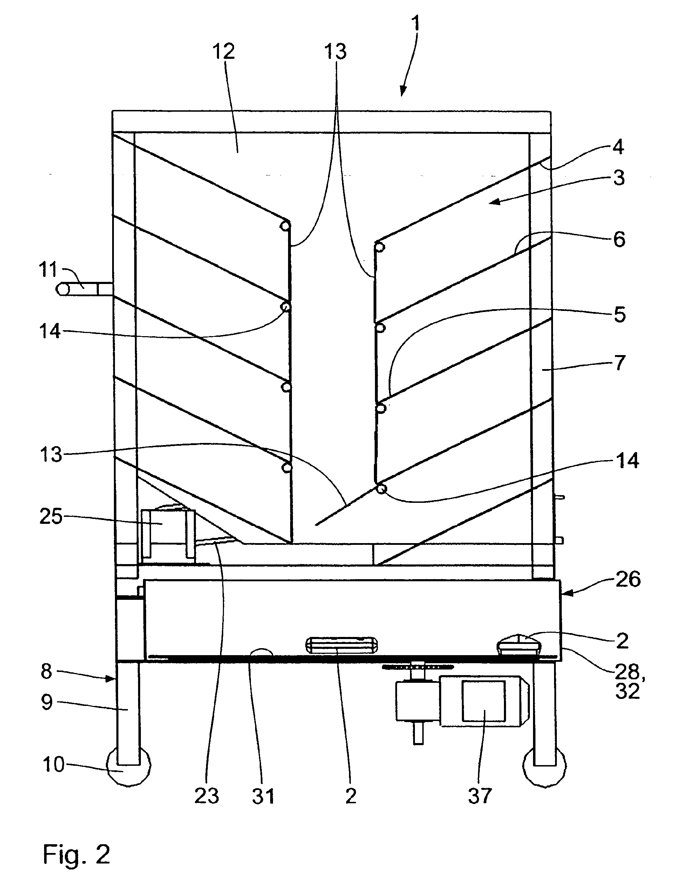

Die Übergabeabschnitte 5 der Lagerfächer 3 sind mit Hilfe von Übergabeklappen 13 verschließbar, die jeweils über ein horizontal verlaufendes Schwenkgelenk 14 zwischen einer Schließstellung, in welcher sie den Übergabeabschnitt 5 verschließen, und einer Offenstellung, in welcher eine Übergabe aus dem jeweiligen Lagerfach 3 möglich ist, verschwenkbar sind. Mit Hilfe einer Feder sind die Übergabeklappen 13 in der Schließstellung vorgespannt. Fig. 2 zeigt die Übergabeklappe 13 des rechts unten dargestellten Lagerfaches 3 in der Offenstellung und die anderen Übergabeklappen 13 in der Schließstellung.

Drehfest mit jeder der Übergabeklappen 13 ist jeweils ein Betätigungshebel 15 in der Verlängerung der Schwenkgelenke 14 jeder Übergabeklappe 13 zugeordnet. Die also insgesamt sechzehn Betätigungshebel 15 sind durch gegenüberliegende Seitenwände 16, 17 des Transportwagens 8, welche parallel zur Trennwand 12 verlaufen, hindurchgeführt, so dass eine Betätigung der Betätigungshebel 15 durch die Seitenwände 16, 17 getrennt von den Lagerfächern 3 erfolgt. In einer Schließstellung sind die Betätigungshebel 15 durch Federn 18 vorgespannt, die von der jeweiligen Seitenwand 16, 17 gehalten werden. Bedingt durch die Anordnung der Lagerfächer 3 liegen die durch eine der Seitenwände 16, 17 hindurchgeführten Betätigungshebel 15 in zwei übereinander angeordneten Vierer-Gruppen vor. Zur Verlagerung jeweils der Betätigungshebel 15 einer dieser Vierer-Gruppen dient ein Mitnehmer 19, so dass für die Betätigungshebel 15 einer Seitenwand 16, 17 zwei Mitnehmer 19 vorgesehen sind. Die beiden einer Seitenwand 16, 17 zugeordneten Mitnehmer 19 sind fest mit einer Endlos-Antriebskette 20 verbunden, welche über zwei übereinander angeordnete Umlenkritzel 21, 22 geführt ist. Letztere werden von der ihnen zugeordneten Seitenwand 16, 17 getragen. Das jeweils untere Umlenkritzel 22 ist über eine weitere Endlos-Antriebskette 23 und ein Antriebsritzel 24 eines Antriebsmotors 25 angetrieben. In Fig. 1 ist der Betätigungshebel 15 des dem Betrachter zugewandten linken unteren Lagerfachs 3 in einer Offenstellung und die anderen Betätigungshebel 15 sind in der Schließstellung dargestellt.

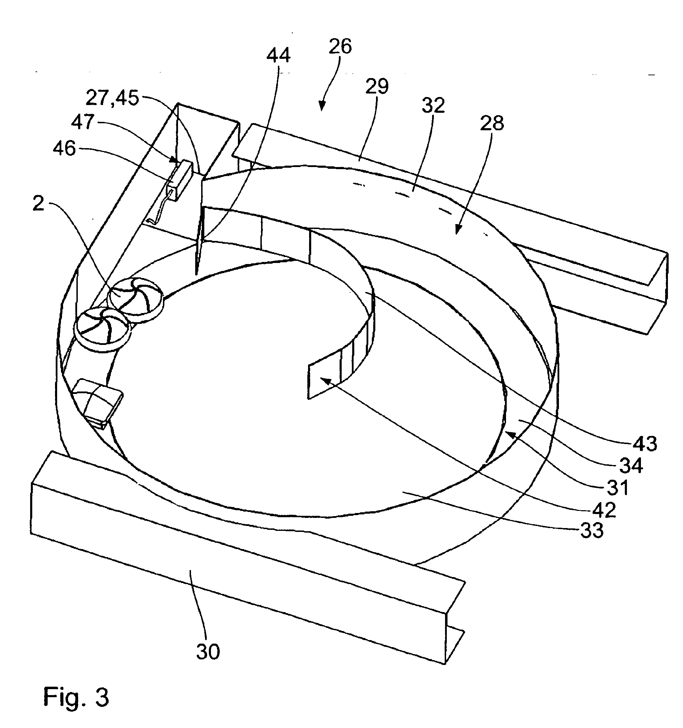

Den Übergabeabschnitten 5 der Lagerfächer 3 ist bei der Vereinzelungsvorrichtung 1 eine Vereinzelungseinheit 26 zur Vereinzelung und Förderung des Backguts 2 hin zu einem Abgabeabschnitt 27 nachgeordnet. Die Vereinzelungseinheit 26 ist stärker im Detail in den Figuren 3 bis 7 dargestellt. Sie umfasst einen im wesentlichen runden Förderbehälter 28, der von zwei gegenüberliegenden, U-förmig profilierten Tragprofilen 29, 30 getragen ist, welche wiederum an den Stützfüßen 9 des Transportwagens 8 festgelegt sind. Der Förderbehälter 28 hat einen runden Behälterboden 31 und eine im wesentlichen zylindrische Behälterwand 32. Der Behälterboden 31 ist in einen runden Innenabschnitt 33 und einen diesen umgebenden ringförmigen Außenabschnitt 34 unterteilt. Der Innenabschnitt 33 und der Außenabschnitt 34 sind unabhängig nach Art einer Drehscheibe voneinander um eine gemeinsame zentrale Rotationsachse 35 antreibbar, die senkrecht auf der Bodenebene des Behälterbodens 31 steht. Der Innenabschnitt 33 ist mit Hilfe eines Antriebsmotors 36 um die Rotationsachse 35 drehbar, der unterhalb des Behälterbodens 31 am Tragrahmen 7 des Transportwagens 8 festgelegt ist. Zur Drehung des Außenabschnitts 34 dient ein ebenfalls unter dem Behälterboden 31 angeordneter Antriebsmotor 37, der ebenfalls am Tragrahmen 7 festgelegt ist. Hierzu treibt der Antriebsmotor 37 ein Antriebsritzel 38 an, welches über eine nicht dargestellte Antriebskette ein Transmissionsritzel 39 antreibt. Das Transmissionsritzel 39 ist um die Rotationsachse 35, gelagert über ein Axial-Radial-Lager 40, welches ebenfalls am Tragrahmen 7 festgelegt ist, drehbar. Über Ausleger 41 ist das Transmissionsritzel 39 drehfest mit dem Außenabschnitt 34 verbunden.

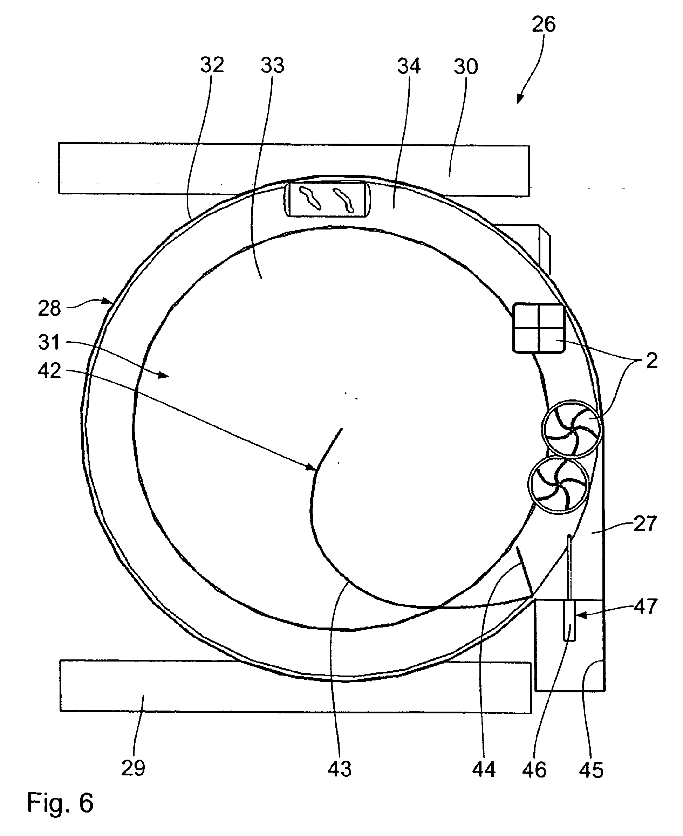

Starr mit der Behälterwand 32 ist ein Leitblech 42 verbunden, welches einen ersten gebogenen Leitabschnitt 43 und einen zweiten, im Vergleich hierzu kurzen geraden Leitabschnitt 44 aufweist. Beide Leitabschnitte 43, 44 verlaufen so knapp oberhalb des Behälterbodens 31, dass sie auf diesem angeordnetes Backgut 2 leiten können. Der längere Leitabschnitt 43 verläuft, wie insbesondere die Aufsicht der Fig. 6 zeigt, ausgehend von der Behälterwand 32 in einem zunehmend stärker im Uhrzeigersinn gekrümmten Bogen bis zu einem Bereich oberhalb des Mittelpunktes des Innenabschnitts 33. Der kurze Leitabschnitt 44 überdeckt im wesentlichen die gesamte Breite des Außenabschnitts 34. Im Bereich des kurzen Leitabschnitts 44 ist die ansonsten geschlossene Behälterwand 32 unterbrochen, wobei sich hieran der Abgabeabschnitt 27 der Vereinzelungseinheit 26 anschließt. Der Abgabeabschnitt 27 setzt den Behälterboden 31 außerhalb des Außenabschnitts 34 zunächst ein Stück weit fort, bevor sich hieran eine Abgabeöffnung 45 anschließt. In die Abgabeöffnung 45 ragt ein Sensorelement 46 eines Sensors 47 zum Zählen des die Abgabeöffnung 45 durchtretenden Backguts 2. Als Sensor 47 kann z.B. eine Lichtschranke eingesetzt sein.

Die Vereinzelungsvorrichtung 1 mit der Vereinzelungseinheit 26 wird folgendermaßen eingesetzt: Zunächst werden die Lagerfächer 3 des Transportwagens 8 befüllt, wobei hierzu alle Übergabeklappen 13 in Schließstellung vorliegen. Anschließend wird der Transportwagen 8 so in Position gebracht, dass die Abgabeöffnung 45 oberhalb einer nicht dargestellten Weiterverarbeitungs-Einrichtung für das Backgut 2, z.B. einer Backvorrichtung oder einer Verpackungsvorrichtung für Backgut-Gebinde, zu liegen kommt.

Anschließend wird nach Bedarf Backgut 2 aus den Lagerfächern 3 der Vereinzelungseinheit 26 zugeführt. Hierzu werden, gesteuert von einer nicht dargestellten zentralen Steuereinrichtung, die Antriebsmotoren 25 so angesteuert, dass die Mitnehmer 19 sequenziell die Betätigungshebel 15 von der Schließstellung in die Offenstellung verlagern, so dass die zugeordneten Übergabeklappen 13 öffnen und das in den jeweiligen Lagerfächem 3 zwischengelagerte Backgut 2 vom jeweiligen Übergabeabschnitt 5 hin zum Förderbehälter 28 der Vereinzelungseinheit 26 übergeben wird. Der jeweils betätigte Antriebsmotor 25 stoppt, sobald die Übergabeklappe 13 ganz geöffnet ist. Das Backgut 2 fällt dabei zunächst überwiegend auf den Innenabschnitt 33 des Behälterbodens 31 des Förderbehälters 28.

Nun wird zunächst der Innenabschnitt 33, gesteuert vom Antriebsmotor 36, kurzzeitig, z.B. fünf Sekunden lang, gegen den Uhrzeigersinn entsprechend der Aufsicht von Fig. 6 gedreht. Durch den Leitabschnitt 43 des Leitblechs 42 wird aufgrund der Relativbewegung des Innenabschnitts 33 zum Leitblech 42 das Backgut 2 auf diese Weise vom Innenabschnitt 33 auf den Außenabschnitt 34 transportiert. Gleichzeitig dreht sich der Außenabschnitt 34, angetrieben vom Antriebsmotor 37, in Fig. 6 im Uhrzeigersinn, so dass das auf dem Außenabschnitt 34 liegende Backgut 2 hin zum Abgabeabschnitt 27 gefördert wird, wohin es vom Außenabschnitt 34 durch den kurzen Leitabschnitt 44 des Leitblechs 42 geleitet wird. Um einen Stau des Backguts 2 im Förderbehälter 28 im Bereich des Leitabschnitts 43 zu vermeiden, wird der Drehsinn des Innenabschnitts 33 von Zeit zu Zeit gewechselt. Vom Abgabeabschnitt 27 aus fällt das Backgut 2 durch die Abgabeöffnung 45 und wird hierbei vom Sensor 47 gezählt. Der Sensor 47, der mit der zentralen Steuereinrichtung verbunden ist, gibt dieser eine Rückmeldung, inwieweit der angeforderte Bedarf an Backgut 2 gedeckt ist. Wenn die erforderliche Anzahl von Stücken Backgut 2 durch die Abgabeöffnung 45 gefallen ist. stoppt die zentrale Steuereinrichtung die Antriebsmotoren 36 und 37 und auch eine weitere Betätigung der Antriebsmotoren 25, so dass keine weitere Übergabeklappe 13 geöffnet wird. Das durch die Abgabeöffnung 45 fallende Backgut 2 gelangt dann zur entsprechenden Weiterverarbeitung, wird also z.B. gebacken oder verpackt.

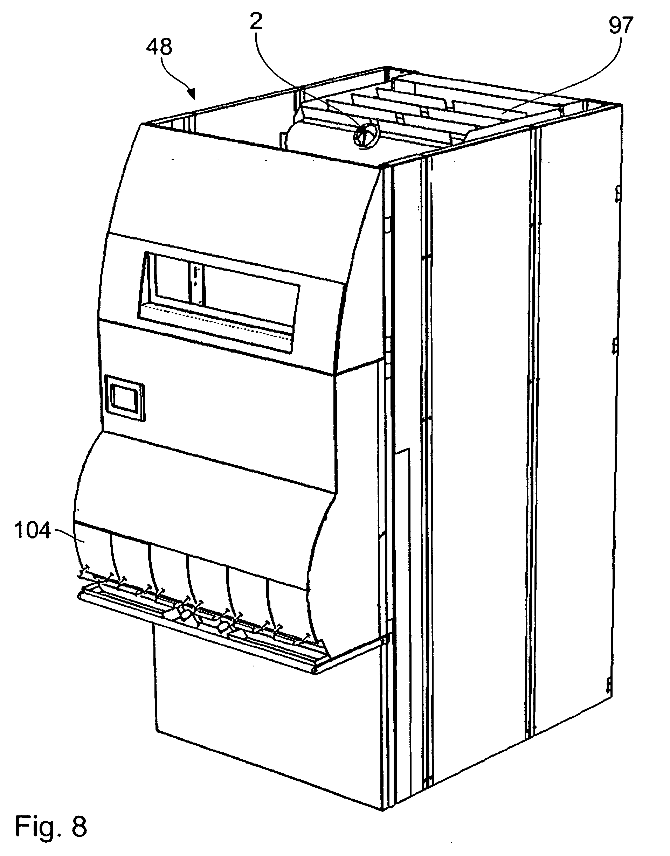

In den Figuren 8 bis 15 ist eine weitere Variante einer Vereinzelungsvorrichtung 1 als Bestandteil einer Backanlage 48 dargestellt. Bauteile, die denjenigen entsprechen, die vorstehend schon unter Bezugnahme auf die Figuren 1 bis 7 beschrieben wurden, tragen die gleichen Bezugszeichen und werden nicht nochmals im einzelnen erläutert.

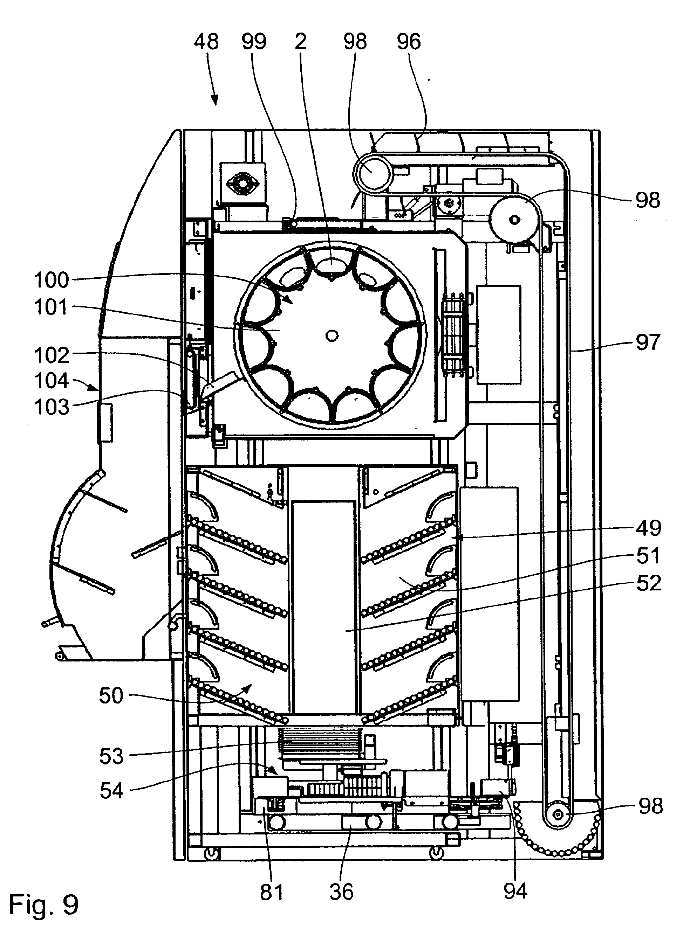

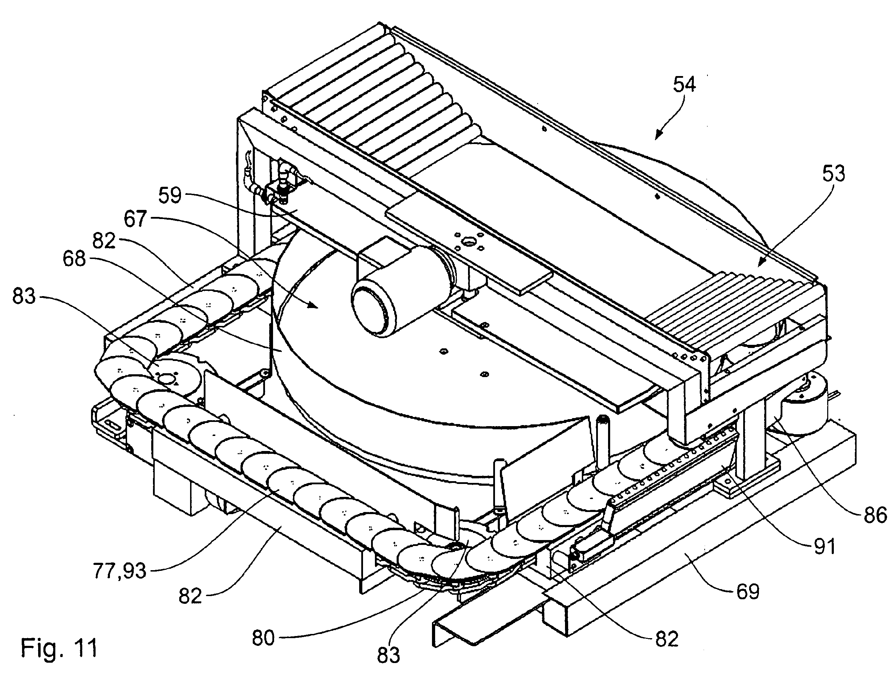

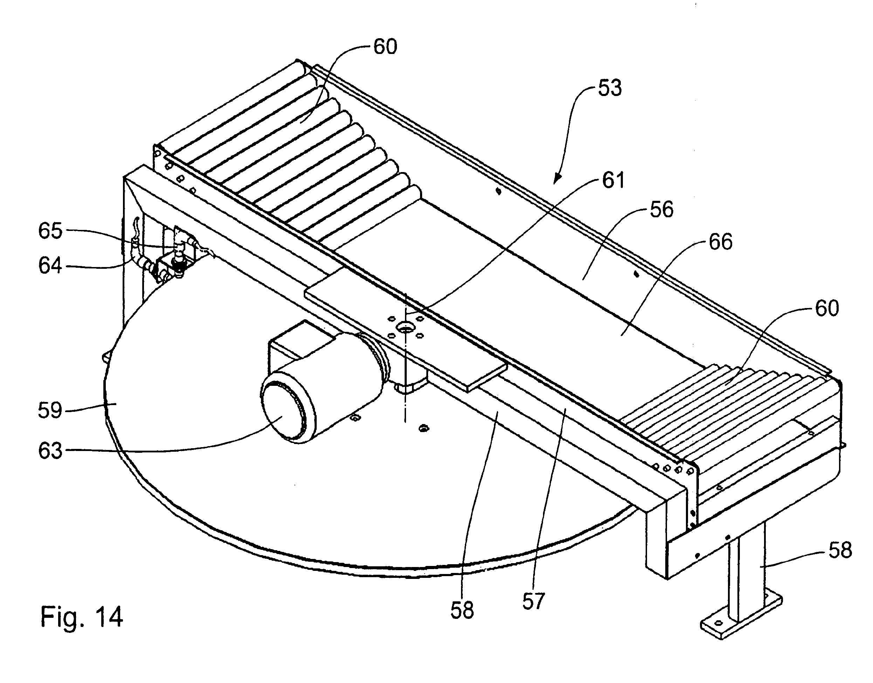

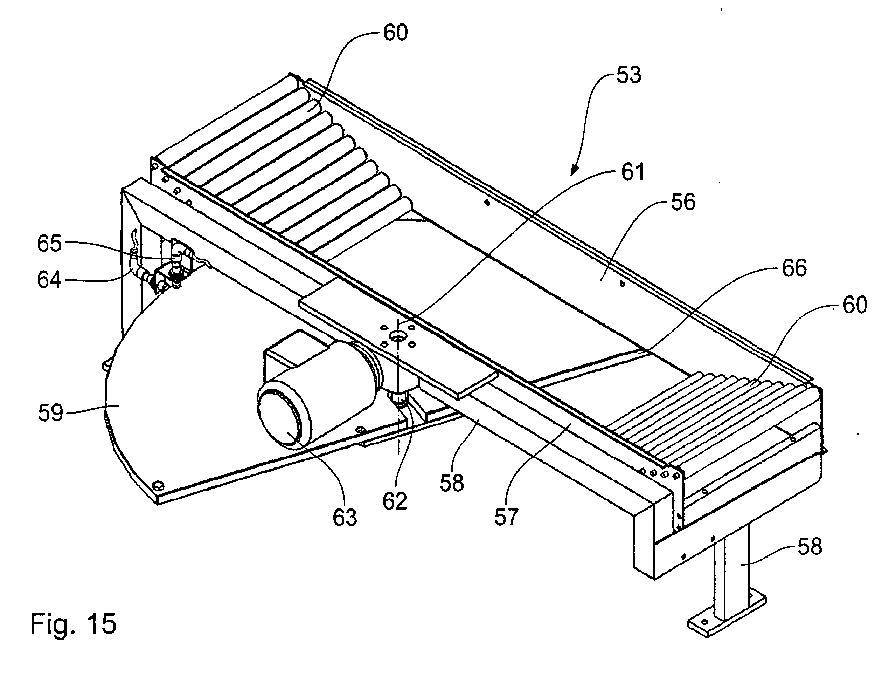

Eine Bevorratungseinrichtung 49 für Backgut 2 umfasst bei der Backanlage 48 zwei nebeneinander angeordnete, fahrbare Behälterträger 50, von denen einer im Schnitt der Fig. 9 dargestellt ist. Auf den näheren Aufbau der Behälterträger 50 kommt es nachfolgend nicht an. Lagerfächer 51 sind dort in ähnlicher Weise angeordnet wie die Lagerfächer 3 der Ausführung nach den Figuren 1 bis 7. Von dort gelangt das Backgut 2 über einen zentralen Fallschacht 52 in einen Zwischenbehälter 53 einer Vereinzelungsvorrichtung 54 der Backanlage 48. Der Zwischenbehälter 53 ist unterhalb des Fallschachts 52 angeordnet. Die Vereinzelungsvorrichtung 54 hat entsprechend der Vereinzelungsvorrichtung 1 der Ausführung nach den Fig. 1 bis 7 ebenfalls die Funktion der Förderung des Backguts 2 vom Zwischenbehälter 53, der einen Zugabeabschnitt der Vereinzelungsvorrichtung 54 darstellt, hin zu einem Abgabeabschnitt 55, wobei eine Backgutvereinzelung stattfindet. Die Vereinzelungsvorrichtung 54 ist isoliert in Fig. 11 dargestellt und der Zwischenbehälter 53 einzeln in den Figuren 14 und 15.

Der nach oben offene Zwischenbehälter 53 ist seitlich begrenzt von zwei gegenüberliegenden Seitenwänden 56, 57, die an einem Tragrahmen 58 montiert sind. Weiterhin ist der Zwischenbehälter 53 zwischen den Seitenwänden 56, 57 seitlich begrenzt durch zu einem Zwischenbehälterboden 59 hin abfallenden, gegenüberliegenden Rollenbahnen 60. Der Zwischenbehälterboden 59 ist in etwa halbkreisförmig und um eine vertikale Achse 61, die durch den Kreismittelpunkt dieses Halbkreises verläuft, schwenkbar. Die Schwenkachse 61 ist daher in bezug auf die Fläche des Zwischenbehälterbodens 59 außermittig.

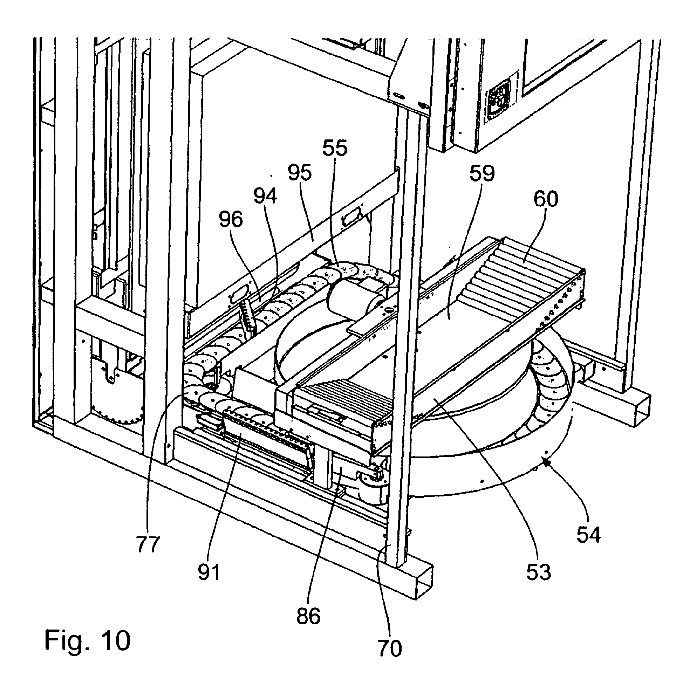

Zum Schwenkantrieb greift ein Antriebsritzel 62 eines am Tragrahmen 58 festgelegten Antriebsmotors 63 in einen komplementär hierzu ausgeführten Gegenkörper im Zwischenbehälterboden 59 ein. Die Momentanstellung des Zwischenbehälterbodens 59, also seine momentane Schwenkposition um die Schwenkachse 61, wird durch Sensoren 64, 65 erfasst. Der Winkelstellungssensor 64 erfasst hierbei den momentanen Schwenkwinkel des Zwischenbehälterbodens 59 um die Schwenkachse 61. Der als Lichtschranke ausgeführte Sensor 65 erfasst, ob der Zwischenbehälterboden 59 in einer z.B. in Fig. 10 dargestellten Schließstellung, in welcher er den Zwischenbehälter 53 vollständig verschließt, oder in einer gegenüber der Schließstellung um die Achse 61 verschwenkten Abgabestellung vorliegt. In der Schließstellung wird die Lichtschranke des Sensors 65 durch den Zwischenbehälterboden 59 nicht unterbrochen, in den Abgabestellungen hingegen schon.

Zwei Abgabestellungen des Zwischenbehälterbodens 59 sind beispielhaft in den Figuren 14 und 15 dargestellt. In der Abgabestellung nach Fig. 14 ist der Zwischenbehälterboden 59 vollständig um 180° aus der Schließstellung herausgeschwenkt, so dass der Zwischenbehälter 53 nach unten offen ist. In der Abgabestellung nach Fig. 15 ist der Zwischenbehälterboden 59 um etwa 60° entgegen dem Uhrzeigersinn um die Schwenkachse 61 aus der Schließstellung heraus verschwenkt, so dass eine Abgabeöffnung 66 resultiert, deren Weite ungefähr ein Viertel der vollständig geöffneten Abgabeöffnung 66 gemäß Fig. 14 beträgt.

Unter der Abgabeöffnung 66 ist eine Vereinzelungseinheit 67 der Vereinzelungsvorrichtung 54 angeordnet, wie z.B. in Fig. 11 dargestellt. Diese umfasst einen Förderbehälter 68, der eine dem Förderbehälter 28 der Ausführung nach den Fig. 1 bis 7 vergleichbare Funktion hat. Der Zwischenbehälter 53 und der Förderbehälter 68 werden von Tragprofilen 69 getragen, die ihrerseits an einem Tragrahmen 70 der Backanlage 48 festgelegt sind.

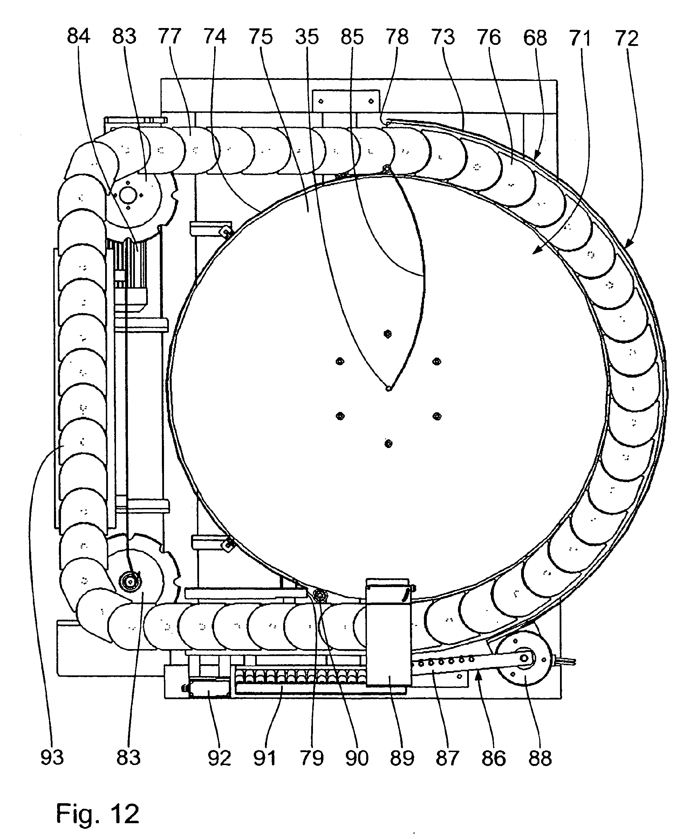

Der Förderbehälter 68 hat einen im wesentlichen runden Behälterboden 71 und eine im wesentlichen zylindrische Behälterwand 72 mit einem ersten Behälterwandabschnitt 73, der in Fig. 12 rechts dargestellt ist, und einem zweiten, in Fig. 12 linken Behälterwandabschnitt 74, der im Vergleich zum ersten Behälterwandabschnitt 73 einen kleineren Krümmungsradius aufweist. Der Behälterboden 71 weist einen runden Innenabschnitt 75 nach Art des Innenabschnitts 33 der Ausführung nach den Fig. 1 bis 7 und einen diesen außen teilweise umgebenden, teilringförmigen Außenabschnitt 76 auf. Letzterer wird gebildet von einem als Schuppenband ausgestalteten Förderband 77, welches in der Aufsicht gemäß Fig. 12 im Uhrzeigersinn umläuft. Das Förderband 77 tritt in den Förderbehälter 68 in Fig. 12 oben durch eine zwischen den Behälterwandabschnitten 73, 74 gebildete Eintrittsöffnung 78 ein und aus dem Förderbehälter 68 durch eine in Fig. 12 unten dargestellte Austrittsöffnung 79 zwischen den Behälterwandabschnitten 73, 74 aus. Das Schuppenband des Förderbands 77 wird getragen von einer Förderkette 80. Letztere ist im Bereich des Außenabschnitts 76 geführt in einem teilkreisförmigen Führungsprofil 81 (vgl. Fig. 9). Der Abschnitt des Förderbandes 77 außerhalb des Förderbehälters 68, also zwischen der Austrittsöffnung 79 und der Eintrittsöffnung 78, wird geführt von weiteren Führungsprofilen 82 und umgelenkt von zwei in die Förderkette 80 eingreifenden Ritzeln 83, wobei eines der Ritzel 83 von einem Motor 84 angetrieben ist.

Der Innenabschnitt 75 ist über den Antriebsmotor 36 um die zentrale, vertikale Rotationsachse 35 drehbar, wie im Zusammenhang mit der Ausführung nach den Fig. 1 bis 7 beschrieben.

Starr mit dem zweiten Behälterwandabschnitt 73 ist im Bereich der Eintrittsöffnung 78 ein Leitblech 85 verbunden, welches sich gebogen bis zur Rotationsachse 35 erstreckt.

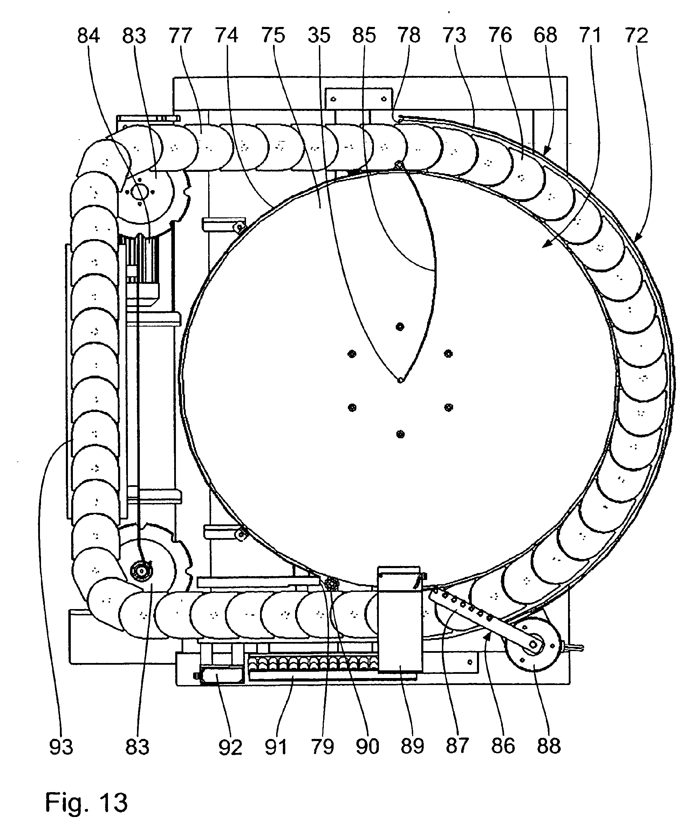

In Bezug auf die Förderrichtung des Förderbandes 77 stromaufwärts der Austrittsöffnung 79 ist neben dem Förderband 77 an dessen Außenseite ein Vereinzelungs-Abweiser 86 angeordnet. Dieser weist eine Abweisklappe 87 auf, die von einer Antriebseinheit 88 zwischen einer in Fig. 12 gezeigten Durchgangsstellung und einer in Fig. 13 gezeigten Abweisstellung umgestellt werden kann. In letzterer versperrt die Abweisklappe 87 das Förderband 77 vor der Austrittsöffnung 79.

In Bezug auf die Förderrichtung des Förderbandes 77 stromabwärts ist dem Vereinzelungs-Abweiser 86 ein als Lichtschranke ausgebildeter Vereinzelungssensor 89 zugeordnet. Im Bereich der Austrittsöffnung 79 ist das Förderband 77 nach innen durch eine Ablenkrolle 90 und nach außen durch einen parallel zum Förderband 77 verlaufenden Begrenzungswandabschnitt 91 begrenzt. Stromabwärts des Begrenzungswandabschnitts 91 ist neben dem Förderband 77 ein weiterer Lichtschrankensensor 92 angeordnet.

Ein gerade verlaufender Abschnitt des Förderbandes zwischen den beiden Umlenkritzeln 83 stellt ein Ausgabe-Fördertrum 93 des Förderbandes 77, also einen Abgabeabschnitt von diesem, dar. Längs dieses Ausgabe-Fördertrums 93 als Positioniereinheit angetrieben verstellbar ist ein Ausgabeschieber 94 (vgl. Fig. 10). Dieser ist geführt über eine Führungsschiene 95, die mit dem Tragrahmen 70 der Backanlage 48 verbunden ist. In Förderrichtung des Backguts 2 sind dem Ausgabeschieber 94 Tragrinnen 96 nachgeordnet, die mit einem Endlos-Förderband 97 verbunden sind. Letzteres läuft um horizontal angeordnete Umlenkwellen 98 um, von denen eine angetrieben ist.

Unterhalb des oberen Umkehrpunktes des Endlos-Förderbands 97 in der Backanlage 48 liegt eine Beschickungsöffnung 99, unter der wiederum ein Backofen 100 angeordnet ist. In Fig. 9 links unterhalb einer Backtrommel 101 des Backofens 100 ist eine Abgaberutsche 102 angeordnet, die hin zu einer Ausgabeöffnung 103 abfällt, die zu einem Entnahmebehälter 104 für fertig gebackenes Backgut 2 führt.

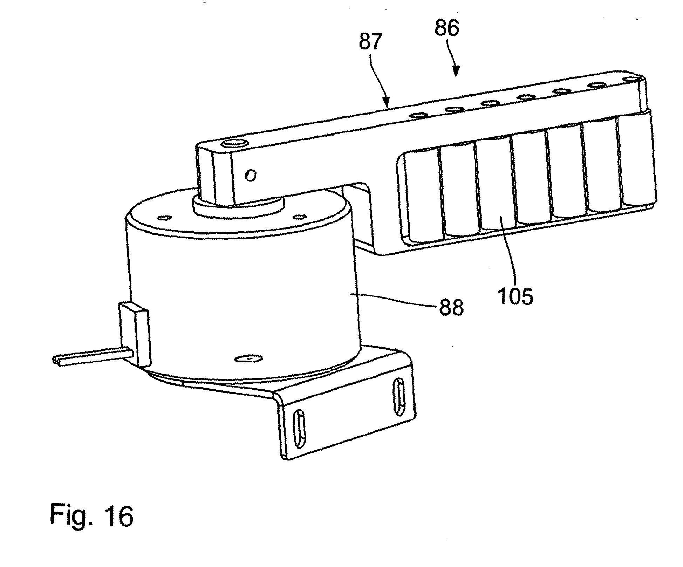

Fig. 16 zeigt den Vereinzelungs-Abweiser 86 im Detail. Die Abweisklappe 87 ist abschnittsweise als Rollenbahn mit einer Mehrzahl von nebeneinander angeordneten und um jeweils eine vertikale Drehachse drehbaren Rollen 105 ausgebildet.

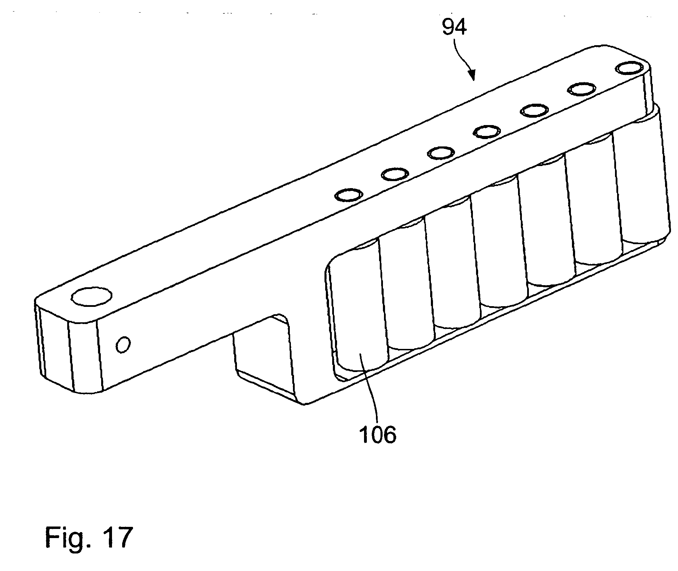

Fig. 17 zeigt den Ausgabeschieber 94 in einer vergrößerten Darstellung. Der Schiebeabschnitt von diesem ist, vergleichbar zur Abweisklappe 87, als Rollenbahn mit einer Mehrzahl von Rollen 106 ausgebildet, die nebeneinander angeordnet und um jeweils eine vertikale Drehachse drehbar sind.

Beim Betrieb der Backanlage 48 nach den Fig. 8 bis 15 werden zunächst die Lagerfächer 51 der beiden Behälterträger 50 befüllt. Dabei können die Behälterträger 50 durchaus entfernt von der restlichen Backanlage 48 angeordnet sein. Nach dem Befüllen werden die Behälterträger 50 nebeneinander in eine Position verbracht, die derjenigen in Fig. 9 entspricht. Gesteuert fallen nun etwa 60 Stücke Backgut 2 aus den Lagerfächern 51 durch den Fallschacht 52 in den Zwischenbehälter 53.

Beim Befüllen des Zwischenbehälters 53 befindet sich der Zwischenbehälterboden 59 in der in Fig. 10 gezeigten Schließstellung. Nach erfolgtem Befüllen des Zwischenbehälters 53 wird der Zwischenbehälterboden 59 in eine erste Abgabestellung gemäß Fig. 15 verbracht. Ein Teil des im Zwischenbehälter 53 vorliegenden Backguts 2 fällt dann vom Zwischenbehälter 53 in den Förderbehälter 68. Die Abgabestellung wird so gewählt, dass nicht mehr als 25 Stücke Backgut auf einmal in den Förderbehälter 68 gelangen. Anschließend findet mit Hilfe der Vereinzelungseinheit 67 der Vereinzelungsvorrichtung 54 ein Vereinzeln des Backguts 2 statt. Hierzu dreht sich der Innenabschnitt 75 des Behälterbodens 71 entgegen dem Uhrzeigersinn, so dass das Backgut 2, abgelenkt vom Leitblech 85 innerhalb des Förderbehälters 68 in den Bereich der Eintrittsöffnung 78 des Förderbands 77 gelangt. Dort wird das Backgut 2 vom Förderband 77 bis hin zur Austrittsöffnung 79 gefördert. Damit das Übergeben des Backguts 2 vom Innenabschnitt 74 auf das Förderband 77 im Bereich der Eintrittsöffnung 78 erleichtert ist, kann das Niveau des Förderbands 77 im Bereich der Eintrittsöffnung 78 etwas niedriger sein als das des Innenabschnitts 75. Im Bereich der Austrittsöffnung 79 wiederum kann das Niveau des Förderbands 77 etwas höher sein als das des Innenabschnitts 75. Um im Bereich der Eintrittsöffnung 78 einen Stau des Backguts 2 zu vermeiden, dreht sich der Innenabschnitt 75 immer wieder kurzzeitig auch im Uhrzeigersinn. Überwiegend dreht sich der Innenabschnitt 75 aber entgegen dem Uhrzeigersinn.

Sobald das führende Stück Backgut 2 auf dem Förderband 77 den Vereinzelungssensor 89 passiert hat, aktiviert ein entsprechendes, vom Vereinzelungssensor 89 abgegebenes Signal den Vereinzelungs-Abweiser 86. Die Abweisklappe 87 schwenkt dann von der Durchgangsstellung nach Fig. 12 in die Abweisstellung nach Fig. 13 und weist die dem führenden Stück Backgut 2 nachfolgenden Stücke Backgut 2 vom Förderband 77 ab auf den Innenabschnitt 75. Beim Abweisen rollt das abgewiesene Stück Backgut 2 an den Rollen 105 der Abweisklappe 86 ab. Hierdurch wird das Stück Backgut 2 geschont und ein Verkleben des Backguts an der Abweisklappe 86 verhindert. Wenn das Niveau des Förderbandes 77 im Bereich der Austrittsöffnung 79 etwas höher ist als das des Innenabschnitts 75, wird dieser Abweisvorgang durch Schwerkrafteinfluss noch erleichtert. Auf diese Weise gelangt nur das einzelne, führende Stück Backgut 2 auf dem Förderband 77 durch die Austrittsöffnung 79. Der Durchtritt des führenden Stücks Backgut 2 durch die Austrittsöffnung 79 wird durch die Ablenkrolle 90 und den Begrenzungswandabschnitt 91 erleichtert. Die Ablenkrolle 90 stellt dabei sicher, dass das Backgut 2 in jedem Fall aus dem Bereich der Austrittsöffnung 79 wegtransportiert wird. Mit dem Lichtschrankensensor 92 wird im weiteren Verlauf des Förderbands 77 kontrolliert, ob tatsächlich die Vereinzelung erfolgreich war, d.h. ob das führende Stück Backgut 2 tatsächlich die Austrittsöffnung 79 durchtreten hat. Hierbei wird überwacht, ob der Lichtschrankensensor 92 während eines vorbestimmten Zeitraums nach dem Umstellen des Vereinzelungs-Abweisers 86 anspricht oder nicht. Wenn die Vereinzelung nicht erfolgreich war, wird der Vereinzelungs-Abweiser 86 wieder in die Durchgangsstellung zurückgestellt und die oben beschriebene Sequenz, beginnend mit dem Ansprechen des Vereinzelungssensors 89 beginnt von neuem. Bei erfolgreicher Vereinzelung wird das führende Backgut 2 weiter auf dem Förderband 77 bis hin zum Ausgabe-Fördertrum 93 transportiert.

Beim führenden Stück Backgut 2 ist der Ausgabeschieber 94 in der am weitesten stromabwärts des Förderbands 77 gelegenen Ausgabestellung. Das führende Stück Backgut 2 wird dann vom Ausgabeschieber 94 unter Einfluss der Mitnahmebewegung durch das Förderband 77 und unter Schwerkrafteinfluss hin zur Tragrinne 96 überführt. Bei dieser Ausgabe durch den Ausgabeschieber 94 rollt das vereinzelte Stück Backgut 2 an den Rollen 106 des Ausgabeschiebers 94 ab. Hierdurch wird das Stück Backgut 2 geschont und ein Verkleben von diesem am Ausgabeschieber 94 verhindert. Die Tragrinne 96 ist bei der Überführung in einer Beschickungsstellung nahe dem unteren Umkehrpunkt des Förderbandes 97. Während das führende Stück Backgut 2 in die Tragrinne 96 überführt wird, kann schon die Vereinzelung des nächsten Stückes Backgut 2 mit Hilfe des Vereinzelungs-Abweisers 86 und der Sensoren 89 und 92 erfolgen, wie oben beschrieben. Zum Abgeben des zweiten Stücks Backgut 2 in die Tragrinne 96 verfährt der Ausgabeschieber 94 ein Stück weit längs des Ausgabe-Fördertrums 93 stromaufwärts, so dass das neu vereinzelte Stück Backgut 2 nach dem Abgeben neben dem zuerst vereinzelten Stück Backgut 2 in der Tragrinne 96 zu liegen kommt. Dieser Vorgang wiederholt sich nun für nachfolgend vereinzelte Stücke Backgut 2, bis auf der Tragrinne 96 ein Satz von z.B. sechs oder acht Stücken Backgut 2 vorliegt.

Sobald ein derartiger Satz vollständig ist, wird das Endlos-Förderband 97 ein Stück weiterbewegt, bis die nächste Tragrinne 96 dem Ausgabe-Fördertrum 93 benachbart vorliegt. Anschließend wird diese nächste Tragrinne 96 entsprechend dem oben Erläuterten befüllt. Dieser Vorgang wiederholt sich, bis alle Tragrinnen 96 mit jeweils einem Satz von Stücken Backgut 2 bestückt sind. Das Endlos-Förderband 97 wird dann in Fig. 9 entgegen dem Uhrzeigersinn bewegt, bis die erste, führende mit Backgut bestückte Tragrinne 96 eine Position im Bereich des oberen Umkehrpunktes für das Endlos-Förderband 97 erreicht hat. Beim Weiterbewegen des Endlos-Förderbandes 97 fällt der dieser führenden Tragrinne 96 zugeordnete Satz von Stücken Backgut 2 durch die geöffnete Beschickungsöffnung 99 in den Backofen 100. Die innere Backtrommel 101 und das Endlos-Förderband 97 werden anschließend synchron so bewegt, dass der Backofen 100 mit Sätzen von Stücken Backgut 2 befüllt wird. Anschließend wird das Backgut 2 im Backofen 100 gebacken. Schon während des Backvorgangs kann das Endlos-Förderband 97 so zurückgestellt werden, dass die erste Tragrinne 96 wieder dem Ausgabe-Fördertrum 93 benachbart ist, so dass schon während des Backens eine neue Vereinzelungssequenz, wie oben beschrieben, stattfinden kann.

Nach dem Ende des Backens fällt das Backgut 2 aus dem Backofen 100 durch die Ausgabeöffnung 103 in den Entnahmebehälter 104 und steht dort zur Entnahme bereit.

Die zeitliche Ansteuerung sowie die Positionsvorgabe für die einzelnen Komponenten der Vereinzelungsvorrichtung 54, insbesondere die Wahl des Zeitpunktes für die Einstellung einer bestimmten Abgabestellung des Zwischenbehälterbodens 59, die Wahl der jeweiligen Abgabestellung, die Wahl der Umkehrzeitpunkte für die Drehbewegung des Innenabschnitts 75, die Ansteuerung und Überwachung der Sensoren 89, 92, des Vereinzelungs-Abweisers 86 sowie des Ausgabeschiebers 94 werden von einer nicht dargestellten, zentralen Steuereinrichtung gesteuert. Letztere arbeitet entsprechend dem, was oben im Zusammenhang mit der Vereinzelungsvorrichtung nach den Figuren 1 bis 7 erläutert wurde.

## Patentansprüche

1. Vereinzelungsvorrichtung (1; 54) für Backgut (2)
- mit einem Zugabeabschnitt (4; 53) zum Zuführen einer Mehrzahl von Stücken Backgut (2),
- mit einer Vereinzelungseinheit (26; 67) zum Vereinzeln der zugeführten Stücke Backgut (2),
- mit einem Abgabeabschnitt (27; 93) zum einzelnen Abgeben der vereinzelten Stücke Backgut (2),
wobei die Vereinzelungseinheit (26; 67) umfasst:
- einen Behälter (28; 68) mit einem Behälterboden (31; 71), der unterteilt ist in einen runden Innenabschnitt (33; 75), dem das Backgut (2) zugeführt wird, und in einen diesen zumindest teilweise umgebenden, insbesondere ringförmigen Außenabschnitt (34; 76),
- wobei der Außenabschnitt (34; 76) relativ zum Innenabschnitt (33; 75) um eine senkrecht auf der Behälterbodenebene stehende Rotationsachse (35) drehantreibbar ist und mit dem Abgabeabschnitt (27; 93) in Förderverbindung steht,
**dadurch gekennzeichnet, dass** der Innenabschnitt (33; 75) um die Rotationsachse (35) mit wechselndem Drehsinn antreibbar ist.

2. Vereinzelungsvorrichtung nach Anspruch 1, **dadurch gekennzeichnet, dass** der Innenabschnitt (33; 75) unabhängig vom Außenabschnitt (34; 76) um die Rotationsachse (35) drehantreibbar ist.

3. Vereinzelungsvorrichtung nach Anspruch 1 oder 2, **dadurch gekennzeichnet, dass** der Behälter (28; 68) ein starres Leitblech (42; 85) aufweist, welches derart geformt ist, dass aufgrund einer Relativbewegung zwischen dem Leitblech (42; 85) und dem Innenabschnitt (33; 75) Backgut (2), welches zunächst auf dem Innenabschnitt (33; 75) liegt, zum Außenabschnitt (34; 76) abgelenkt wird.

4. Vereinzelungsvorrichtung nach einem der Ansprüche 1 bis 3, **gekennzeichnet durch** einen Sensor (47; 89, 92), insbesondere eine Lichtschranke, zum Zählen der vereinzelten Stücke Backgut (2).

5. Vereinzelungsvorrichtung nach einem der Ansprüche 1 bis 4, **dadurch gekennzeichnet, dass** der Zugabeabschnitt (53) durch einen Zwischenbehälter gebildet ist, der derart ausgestaltet ist, dass aus diesem eine Teilmenge von Stücken Backgut (2) an die nachgelagerten Komponenten der Vereinzelungsvorrichtung abgegeben wird.

6. Vereinzelungsvorrichtung nach Anspruch 5, **dadurch gekennzeichnet, dass** der Zwischenbehälter (53) eine in ihrer Weite einstellbare Abgabeöffnung (66) aufweist.

7. Vereinzelungsvorrichtung nach Anspruch 6, **dadurch gekennzeichnet, dass** der Zwischenbehälter (53) einen um eine außermittige Achse (61) zwischen wenigstens einer Offen- und Schließstellung verstellbaren und in der jeweiligen Stellposition die Weite der Abgabeöffnung (66) vorgebenden Zwischenbehälterboden (59) aufweist.

8. Vereinzelungsvorrichtung nach einem der Ansprüche 1 bis 7, **dadurch gekennzeichnet, dass** die Vereinzelungseinheit (26; 67) einen als Förderband (77), insbesondere als Schuppenband, ausgeführten Außenabschnitt (76) aufweist.

9. Vereinzelungsvorrichtung nach einem der Ansprüche 1 bis 8, **gekennzeichnet durch** einen Vereinzelungs-Abweiser (86), der mit mindestens einem Vereinzelungssensor (89) zusammenarbeitet und abhängig von einem Signal des Vereinzelungssensors (89) die einem ersten, auf dem Außenabschnitt (76) geförderten Stücke Backgut (2) folgenden Stücke Backgut (2) vom Außenabschnitt (76) zurück auf den Innenabschnitt (75) befördert.

10. Vereinzelungsvorrichtung nach Anspruch 9, **gekennzeichnet durch** einen dem Vereinzelungs-Abweiser (86) in Förderrichtung des Außenabschnitts (76) nachgelagerten weiteren Sensor (92) zur Erfassung von auf dem Außenabschnitt (76) und/oder dem Abgabeabschnitt nach dem Vereinzelungs-Abweiser (86) geförderten Stücken Backgut (2).

11. Vereinzelungsvorrichtung nach Anspruch 9 oder 10, **dadurch gekennzeichnet, dass** der Abgabeabschnitt (93) einen Ausgabeschieber (94) aufweist, der einem Ausgabe-Fördertrum (93) des Außenabschnitts (76) nach dem Vereinzelungs-Abweiser (86) zugeordnet ist und Backgut (2) quer zur Förderrichtung des Ausgabe-Fördertrums (93) von diesem abgibt.

12. Vereinzelungsvorrichtung nach einem der Ansprüche 1 bis 11, **gekennzeichnet durch** mindestens ein Ablenkelement (90, 91), insbesondere mit einer um eine vertikale Achse drehbaren Rolle, zur Ablenkung von Backgut hin zum Außenabschnitt (76) und/oder von diesem weg.

## Claims

1. Separation device (1; 54) for dough pieces (2) comprising
- an inlet portion (4; 53) for supplying a plurality of dough pieces (2),
- a separation unit (26; 67) for separating the supplied dough pieces (2),
- an outlet portion (27; 55) for individually discharging the dough pieces (2) separated from one another,
wherein the separation unit (26; 67) comprises:
- a container (28; 68) having a container bottom (31; 71) which is divided into a round inner portion (33; 75) to which the dough pieces (2) are supplied and an outer portion (34; 76), particularly an annular one, surrounding at least part of the inner portion (33),
- wherein the outer portion (34; 76) is drivable for rotation relative to the inner portion (33; 75) about an axis of rotation (35) which is perpendicular to the container bottom plane and is arranged in conveying connection with the outlet portion (27; 55),
**characterized in that** the inner portion (33; 75) is drivable about the axis of rotation in alternating senses of rotation.

2. Separation device according to claim 1, **characterized in that** the inner portion (33; 75) is drivable for rotation about the axis of rotation (35) independently of the outer portion (34; 76).

3. Separation device according to claim 1 or 2, **characterized in that** the container (28; 68) comprises a rigid baffle plate (42; 85) which is formed such that dough pieces (2), which are initially positioned on the inner portion (33; 75), are deflected towards the outer portion (34; 76) due to a relative movement between the baffle plate (42; 85) and the inner portion (33; 75).

4. Separation device according to any one of claims 1 to 3, **characterized by** a sensor (47; 89, 92), particularly a light barrier, for counting the dough pieces (2) separated from one another.

5. Separation device according to any one of claims 1 to 4, **characterized in that** the inlet portion (53) is formed by an intermediate container which is designed such that a partial amount of dough pieces (2) is discharged to the downstream components of the separating device.

6. Separation device according to claim 5, **characterized in that** the intermediate container (53) comprises an outlet opening (66) whose width is adjustable.

7. Separation device according to claim 6, **characterized in that** the intermediate container (53) comprises an intermediate container bottom (59) which is movable about an eccentric axis (61) between at least an open position and a closed position and whose respective position determines the width of the outlet (66).

8. Separation device according to any one of claims 1 to 7, **characterized in that** the separation unit (26; 67) comprises an outer portion (76) which is designed as a conveyor belt (77), particularly a slat belt.

9. Separation device according to any one of claims 1 to 8, **characterized by** a separation deflector (86) which interacts with at least one separation sensor (89) and, responding to a signal from the separation sensor (89), transports dough pieces (2) following a first dough piece (2) conveyed on the outer portion (76) from the outer portion (76) back to the inner portion (75).

10. Separation device according to claim 9, **characterized by** another sensor (92) which is arranged downstream of the separation deflector (86) in the direction of conveyance of the outer portion (76) and serves to detect dough pieces (2) which are conveyed on the outer portion (76) and/or the outlet portion (55) arranged downstream of the separation deflector (86).

11. Separation device according to claim 9 or 10, **characterized in that** the outlet portion (55) comprises a discharge slide (94) which is allocated to an output section (93) of the outer portion (76) arranged downstream of the separation deflector (86) and which discharges dough pieces (2) perpendicular to the direction of conveyance of the output section (93).

12. Separation device according to any one of claims 1 to 11, **characterized by** at least one deflecting element (90, 91), particularly a roller which is rotatable around a vertical axis, for deflecting dough pieces towards the outer portion (76) and/or away therefrom.

## Revendications

1. Dispositif de séparation (1 ; 54) de produits de boulangerie (2)
- avec un tronçon d'apport (4 ; 53) pour l'alimentation d'une pluralité d'unités de produits de boulangerie (2),
- avec une unité de séparation (26 ; 67) pour la séparation des unités alimentées de produits de boulangerie (2),
- avec un tronçon de dépôt (27 ; 93) pour le dépôt individuel des unités séparées de produits de boulangerie (2),
l'unité de séparation (26 ; 67) comportant :
- un récipient (28 ; 68) avec un fond de récipient (31 ; 71) qui est subdivisé en une partie intérieure ronde (33 ; 75), à laquelle est amenée les produits de boulangerie (2), et en une partie extérieure (34 ; 76) entourant celle-ci au moins en partie, en particulier annulaire,
- la partie extérieure (34 ; 76) pouvant être entraînée en rotation par rapport à la partie intérieure (34 ; 76) autour d'un axe de rotation (35) se trouvant perpendiculaire au plan du fond de récipient et étant en liaison de transport avec le tronçon de dépôt (27 ; 93),
**caractérisé en ce que** la partie intérieure (33 ; 75) peut être entraînée autour de l'axe de rotation (35) au sens de rotation variable.

2. Dispositif de séparation selon la revendication 1, **caractérisé en ce que** la partie intérieure (33 ; 75) peut être entraînée en rotation indépendamment de la partie extérieure (34 ; 76) autour de l'axe de rotation (35).

3. Dispositif de séparation selon la revendication 1 ou 2, **caractérisé en ce que** le récipient (28 ; 68) présente une tôle de guidage (42 ; 85) rigide qui est formée de telle sorte qu'en raison d'un mouvement relatif entre la tôle de guidage (42 ; 85) et la partie intérieure (33 ; 75), des produits de boulangerie (2) qui se trouvent tout d'abord sur la partie intérieure (33 ; 75), sont déviés vers la partie extérieure (34 ; 76).

4. Dispositif de séparation selon l'une quelconque des revendications 1 à 3, **caractérisé par** un capteur (47 ; 89, 92), en particulier une barrière lumineuse pour compter les unités séparées des produits de boulangerie (2).

5. Dispositif de séparation selon l'une quelconque des revendications 1 à 4, **caractérisé en ce que** le tronçon d'apport (53) est formé par un récipient intermédiaire qui est configuré de sorte qu'une quantité partielle d'unités de produits de boulangerie (2) soit remise à partir de celui-ci aux composants placés après du dispositif de séparation.

6. Dispositif de séparation selon la revendication 5, **caractérisé en ce que** le récipient intermédiaire (53) présente une ouverture de dépôt (66) réglable dans sa largeur.

7. Dispositif de séparation selon la revendication 6, **caractérisé en ce que** le récipient intermédiaire (53) présente un fond de récipient intermédiaire (59) prescrivant dans la position de réglage respective la largeur de l'ouverture de dépôt (66) et réglable autour d'un axe (61) excentré entre au moins une position ouverte et une position fermée.

8. Dispositif de séparation selon l'une quelconque des revendications 1 à 7, **caractérisé en ce que** l'unité de séparation (26 ; 67) présente une partie extérieure (76) réalisée comme une bande transporteuse (77), en particulier comme une bande à écailles.

9. Dispositif de séparation selon l'une quelconque des revendications 1 à 8, **caractérisé par** un déflecteur de séparation (86) qui collabore avec au moins un capteur de séparation (89) et transporte en fonction d'un signal du capteur de séparation (89) les unités de produits de boulangerie (2) suivant une première unité de produits de boulangerie (2) transportée sur la partie extérieure (76), de la partie extérieure (76) de nouveau à la partie intérieure (75).

10. Dispositif de séparation selon la revendication 9, **caractérisé par** un autre capteur (92) logé en aval du déflecteur de séparation (86) dans le sens de transport de la partie extérieure (76) pour la détection d'unités de produits de boulangerie (2) transportées sur la partie extérieure (76) et/ou le tronçon de dépôt après le déflecteur de séparation (86).

11. Dispositif de séparation selon la revendication 9 ou 10, **caractérisé en ce que** le tronçon de dépôt (93) présente un coulisseau de dépôt (94) qui est associé à un brin de transport de dépôt (93) de la partie extérieure (76) après le déflecteur de séparation (86) et remet des produits de boulangerie (2) transversalement au sens de transport du brin de transport de dépôt (93) depuis celui-ci.

12. Dispositif de séparation selon l'une quelconque des revendications 1 à 11, **caractérisé par** au moins un élément de déviation (90, 91), en particulier avec un rouleau rotatif autour d'un axe vertical, pour la déviation de produits de boulangerie vers la partie extérieure (76) et/ou loin de celle-ci.
